# EUROPÄISCHE PATENTANMELDUNG

(11) **EP 1 770 300 A2**
(43) Veröffentlichungstag der Anmeldung: **04.04.2007**
(21) Anmeldenummer: 06017003.2
(22) Anmeldetag: 16.08.2006
(51) Int. Cl.: F16D 59/00, F16D 51/00

(54) **Fliehkraftbremse**

(30) Priorität: 30.09.2005 DE 102005047296
(71) Anmelder: SUCO Robert Scheuffele GmbH & Co. KG, 74321 Bietigheim-Bissingen (DE)
(72) Erfinder: Kowatsch, Ulrich, 71229 Leonberg (DE)
(74) Vertreter: Kohler Schmid Möbus

(57) **Zusammenfassung**

Bei einer Fliehkraftbremse (1) mit einem Rotationselement (2) und einer das Rotationselement (2) zumindest teilweise übergreifenden Bremstrommel (8) sowie mit wenigstens einem zwischen dem Rotationselement (2) und einer Innenwandung (7) der Bremstrommel (8) im Wesentlichen radial beweglichen Fliehbacken (4), der an dem Rotationselement (2) angeordnet ist, ist eine Zusatzbremseinrichtung für das Rotationselement (2) vorgesehen, die bei Überschreiten einer vorgegebenen Drehzahl durch das Rotationselement (2) auslöst. Dadurch kann das Rotationselement bis zum Stillstand abgebremst werden.

## Beschreibung

Die Erfindung betrifft eine Fliehkraftbremse mit einem Rotationselement und einer das Rotationselement zumindest teilweise übergreifenden Bremstrommel, sowie mit wenigstens einem zwischen dem Rotationselement und einer Innenwandung der Bremstrommel im Wesentlichen radial beweglichen Fliehbacken, der an dem Rotationselement angeordnet ist.

Fliehkraftbremsen sind grundsätzlich bekannt. Sie dienen in der Regel nicht direkt einer starken Verringerung der Umdrehungszahl, sondern der Begrenzung derselben. Die Fliehbacken beginnen sich ab einer bestimmten Antriebsdrehzahl durch die Zentrifugalkraft aus einer Ruhelage radial nach außen zu bewegen. Bei Erreichen der Einschaltdrehzahl kommen die Fliehbacken mit der Innenwandung der Trommel in Berührung. Zwischen den Fliehbacken und der Trommelwandung können Bremsbeläge vorgesehen sein, die die Reibung erhöhen. Die Bremsbeläge können entweder an den Fliehbacken oder an der Innenwandung der Bremstrommel angebracht sein. Bei bestimmten Anwendungsfällen ist es jedoch wünschenswert, das Rotationselement vollständig anzuhalten.

Aufgabe der vorliegenden Erfindung ist es deshalb, eine Fliehkraftbremse der eingangs genannten Art derart weiterzubilden, dass das Rotationselement bei Bedarf, insbesondere, wenn das Rotationselement eine vorgegebene Drehzahl überschreitet, vollständig angehalten werden kann.

Erfindungsgemäß wird diese Aufgabe auf ebenso überraschende wie wirkungsvolle Art und Weise dadurch gelöst, dass eine Zusatzbremseinrichtung für das Rotationselement vorgesehen ist, die bei Überschreiten einer vorgegebenen Drehzahl durch das Rotationselement auslöst. Dies bedeutet, dass die Fliehkraftbremse bis zu der vorgegebenen Drehzahl unwirksam ist. Wird die vorgegebene Drehzahl jedoch überschritten, so wird die Zusatzbremseinrichtung wirksam, sodass ein vollständiger Stillstand des Rotationselements erreicht wird. Das Rotationselement kann dabei als Antriebswelle oder als Nabe ausgebildet sein bzw. eine solche aufweisen.

Bei einer besonders bevorzugten Ausführungsform kann die Bremstrommel Bestandteil der Zusatzbremseinrichtung sein, wobei die Bremstrommel begrenzt drehbeweglich angeordnet ist und von dem zumindest einen Fliehbacken bei Überschreiten der vorgegebenen Drehzahl um einen vorgegebenen Winkelbereich mitgenommen wird und dabei die Zusatzbremsung auslöst. Während im Stand der Technik die Bremstrommel drehfest angeordnet ist, kann sie erfindungsgemäß in einem vorgegebenen Winkelbereich bewegt werden und dadurch die Zusatzbremsung auslösen.

Vorzugsweise ist an der Bremstrommel eine Scheibe drehfest angeordnet, die axial beweglich ist. Durch die axial bewegliche Scheibe kann in Zusammenwirkung mit weiteren Elementen eine axiale Bremskraft erzeugt werden. Dabei kann vorgesehen sein, dass die Scheibe unterhalb der vorgegebenen Drehzahl in axialer Richtung durch einen Verriegelungsmechanismus verriegelt ist und oberhalb der vorgegebenen Drehzahl axial entriegelt ist und eine insbesondere axial wirkende Bremskraft zum Abbremsen des Rotationselements erzeugt. Unterhalb der vorgegebenen Drehzahl kann die Scheibe daher durch den Verriegelungsmechanismus in unmittelbarer Nähe zu der Bremstrommel, insbesondere in Anlage an der Bremstrommel gehalten werden. Hierdurch wird sichergestellt, dass die Scheibe von einer Bremsscheibe beabstandet gehalten wird.

Wenn die Scheibe jedoch entriegelt ist, also das Rotationselement eine oberhalb der vorgegebenen Grenze liegende Drehzahl aufweist, kann die entriegelte Scheibe mit zumindest einer drehfest mit dem Rotationselement verbundenen Bremsscheibe, vorzugsweise einer Membranscheibe, und einem drehfesten Widerlager zusammenwirken. Insbesondere wird aufgrund der axialen Bewegung der Scheibe die Bremsscheibe zwischen der Scheibe und dem Widerlager eingeklemmt bzw. eingespannt.

Die Bremswirkung kann erhöht werden, wenn zwischen der Scheibe und der Bremsscheibe und/oder zwischen der Bremsscheibe und dem Widerlager ein Bremsbelag vorgesehen ist. Vorzugsweise sind Bremsbeläge an gegenüberliegenden Stellen beidseits der Bremsscheibe vorgesehen.

Bei einer besonders bevorzugten Ausführungsform können mehrere Bremsscheiben vorgesehen sein, zwischen die Lamellen des Widerlagers eingreifen. Zwischen den Bremsscheiben und den Lamellen können wiederum reibungserhöhende Bremsbeläge vorgesehen sein. Insbesondere können die Bremsscheiben sich in axialer Richtung gegenüberliegende Bremsbeläge aufweisen.

Besonders bevorzugt ist es, wenn die Scheibe durch mindestens eine Axialfeder axial vorgespannt ist. Nach dem Lösen des Verriegelungsmechanismus wird die Scheibe dadurch automatisch in Richtung auf die Bremsscheibe bewegt und die Bremsscheibe zwischen der Scheibe und dem Widerlager eingespannt. Die Axialfeder stützt sich dabei vorzugsweise an der Bremstrommel ab.

Hierbei ist es besonders vorteilhaft, wenn die Vorspannung der mindestens einen Axialfeder einstellbar ist. Dadurch kann das Bremsmoment der Zusatzbremseinrichtung verändert und eingestellt werden.

Für den Verriegelungsmechanismus sind unterschiedliche Ausführungsformen denkbar. Bevorzugt ist eine Ausführungsform, bei der der Verriegelungsmechanismus eine oder mehrere Kugeln umfasst, die unterhalb der vorgegebenen Drehzahl in einer Vertiefung des Widerlagers angeordnet sind. Dabei können die Kugeln die Scheibe von dem Widerlager und damit von der dazwischen angeordneten Bremsscheibe beabstandet halten. Bei einer Verdrehung der Bremstrommel werden die Kugeln aus ihren Vertiefungen verdrängt und gelangen in eine Aussparung, die größer ist als die Tiefe der Vertiefung. Dadurch wird eine Annäherung der Scheibe an das Widerlager erlaubt, sodass die Zusatzbremsung erfolgt.

Bei einer bevorzugten Ausführungsform können die Kugeln in einem Kugelkäfig angeordnet sein. Bei einer Verdrehung der Bremstrommel kann der Kugelkäfig mitgenommen werden und dabei die Kugeln aus den zugeordneten Vertiefungen bewegen. Vorzugweise ist der Kugelkäfig begrenzt verdrehbar angeordnet und derart mit der Bremstrommel gekoppelt, dass dadurch die Begrenzung der Drehbarkeit der Bremstrommel realisiert wird.

Bei einer bevorzugten Ausgestaltung der Erfindung kann vorgesehen sein, dass die Zusatzbremseinrichtung manuell zurücksetzbar ist. Weiterhin kann vorgesehen sein, dass die Zusatzbremseinrichtung bei einem vorgebbaren Ereignis - manuell oder automatisch - auslösbar ist. So kann die Zusatzbremseinrichtung beispielsweise bei Detektion des unrunden Laufs eines Antriebs ausgelöst werden.

Bei einer Ausführungsform kann ein Sensor vorgesehen sein, der ein Auslösen der Zusatzbremseinrichtung erkennt und mit einer Signalisierungseinrichtung in Verbindung steht, die das Auslösen der Zusatzbremseinrichtung signalisiert. Dadurch wird das Auslösen der Zusatzbremsung leicht erkennbar.

Weitere Merkmale und Vorteile der Erfindung ergeben sich aus der nachfolgenden detaillierten Beschreibung von Ausführungsbeispielen der Erfindung anhand der Figuren der Zeichnung, die erfindungswesentliche Einzelheiten zeigt, sowie aus den Ansprüchen. Die einzelnen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt, welche in der nachfolgenden Beschreibung näher erläutert werden.

Es zeigen:
- Fig. 1: einen Längsschnitt durch eine erfindungsgemäße Fliehkraftbremse;
- Fig. 2: eine Prinzipdarstellung eines Verriegelungsmechanismus;
- Fig. 3a: eine konkrete Ausführungsform eines Verriegelungsmechanismus in einer Verriegelungsstellung;
- Fig. 3b: die Ausführungsform des Verriegelungsmechanismus gemäß der Fig. 3b in einer Entriegelungsstellung.

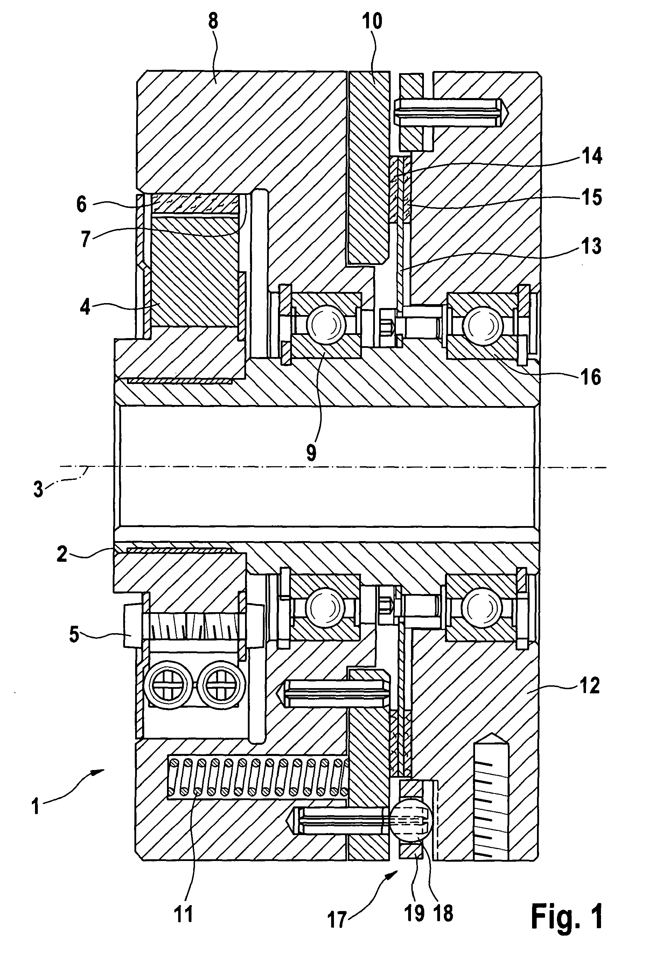

Die in der Fig. 1 gezeigte Fliehkraftbremse 1 weist ein als Nabe ausgebildetes Rotationselement 2 auf, welches um eine Rotationsachse 3 drehbar angeordnet ist. An dem Rotationselement 2 sind Fliehbacken 4 angeordnet. Sie werden bei einer Drehbewegung des Rotationselements 2 von diesem mitgenommen. Aufgrund der Zentrifugalkraft werden die Fliehbacken 4 bei einer Drehung des Rotationselements 2 im Wesentlichen radial, vorzugsweise gegen eine Rückstellkraft, ausgelenkt, sodass die Bremsbeläge 6 der Fliehbacken 4 mit der Innenwandung 7 der Bremstrommel 8 in Berührung kommen. Die Bremstrommel 8 übergreift das Rotationselement 2 abschnittsweise. Zwischen der Bremstrommel 8 und dem Rotationselement 2 sind Kugellager 9 angeordnet.

An der Bremstrommel 8 ist eine Scheibe 10 drehfest angeordnet. Die Scheibe 10 ist in bestimmten Betriebszuständen axial verschieblich und stützt sich über eine Axialfeder 11 an der Bremstrommel 8 ab. Zwischen der Scheibe 10 und einem drehfesten Widerlager 12 ist eine Bremsscheibe 13 angeordnet, die drehfest mit dem Rotationselement 2 verbunden ist. Die Bremsscheibe 13 weist an sich axial gegenüberliegenden Stellen Bremsbeläge 14, 15 auf. Das Rotationselement 2 ist über Kugellager 16 in dem Widerlager 12 drehbar gelagert. Die Kugellager 9, 16 können wegen der auftretenden Axialkräfte als Schrägkugellager ausgebildet sein.

Unterhalb einer vorgegebenen Drehzahl wird die Scheibe 10 über einen Verriegelungsmechanismus 17 in Anlage an die Bremstrommel 8 gehalten. Insbesondere wird die Scheibe 10 durch Kugeln 18 von dem Widerlager 12 und damit von der Bremsscheibe 13 beabstandet gehalten. Im Ausführungsbeispiel sind acht Kugeln 18 über den Umfang verteilt angeordnet, wobei die Kugeln 18 in einem Kugelkäfig 19 angeordnet sind.

Wenn das Rotationselement 2 eine vorgegebene Drehzahl erreicht, liegen die Fliehbacken 4 mit den Bremsbelägen 6 an der Bremstrommel 8 an und nehmen die Bremstrommel 8 mit. Dadurch werden die Kugeln 18 aus ihrer Ruhelage bewegt und die Scheibe 10 für eine Axialbewegung freigegeben. Aufgrund der vorgespannten Axialfeder 11 wird die Scheibe 10 gegen den Bremsbelag 14 der Bremsscheibe 13 gedrückt. Dies wiederum bewirkt, dass der Bremsbelag 15 gegen das Widerlager 12 gedrückt wird. Somit wird die Bremsscheibe 13 mit ihren Bremsbelägen 14, 15 zwischen der Scheibe 10 und dem Widerlager 12 eingespannt und das Rotationselement 2 bis zum Stillstand abgebremst.

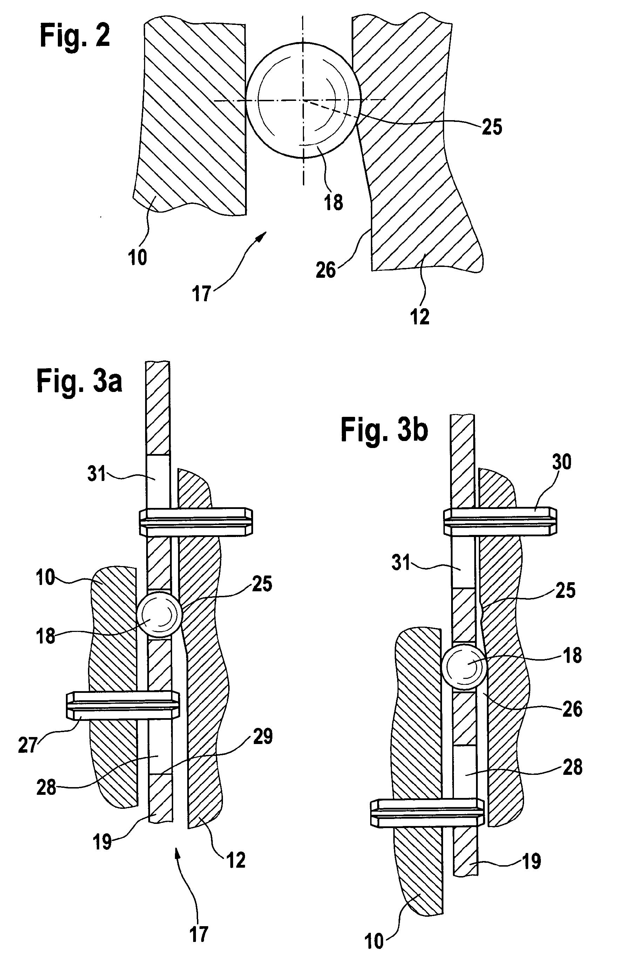

Die Fig. 2 zeigt eine Prinzipdarstellung des Verriegelungsmechanismus 17. Eine Kugel 18 liegt in einer Ruhestellung, d. h. unterhalb der vorgegebenen Drehzahl des Rotationselements 2, in einer Vertiefung 25 des Widerlagers 12. Bei einer Verdrehung der Bremstrommel 8 bzw. der damit drehfest verbundenen Scheibe 10 wird die Kugel 18 aus der gezeigten Ruhelage bewegt, sodass sie in eine Aussparung 26 gelangt. Dies bewirkt, dass sich die Scheibe 10 und das Widerlager 12 aneinander annähern können.

In der Fig. 3a ist eine mögliche konkrete Ausführungsform des Verriegelungsmechanismus 17 gezeigt. Wiederum liegt die Kugel 18 in einer Vertiefung 25 des Widerlagers 12. Sie stützt dadurch die Scheibe 10 ab und hält die Scheibe 10 von dem Widerlager 12 beabstandet. In diesem Fall ist die Kugel 18 in einem Kugelkäfig 19 angeordnet. Als Stifte ausgebildete Vorsprünge 27, die drehfest mit der Scheibe 10 bzw. der Bremstrommel 8 verbunden sind, greifen in Schlitze 28 des Kugelkäfigs 19 ein.

Wird nun die Bremstrommel 8 bzw. die Scheibe 10 verdreht, so gelangt der Vorsprung 27, wie dies in der Fig. 3b gezeigt ist, an die untere Begrenzung 29 des Schlitzes 28 und nimmt dadurch den Kugelkäfig 19 mit. Dies bewirkt, dass auch die Kugel 18 außer Eingriff mit der Vertiefung 25 gelangt und in der Aussparung 26 zu liegen kommt. Gleichzeitig gelangt auch der als Stift ausgebildete Vorsprung 30, der drehfest mit dem Widerlager 12 verbunden ist, an die gegenüberliegende Begrenzung des Schlitzes 31. Dies bewirkt, dass der Kugelkäfig 19 an dem Vorsprung 30 angreift und nicht weiter bewegt werden kann. Somit wird auch die Drehbewegung der Scheibe 10 und damit der Bremstrommel 8 begrenzt. Dadurch, dass die Kugel 18 in die Aussparung 26 gelangt ist, konnte sich die Scheibe 10 an das Widerlager 12 annähern.

## Patentansprüche

1. Fliehkraftbremse (1) mit einem Rotationselement (2) und einer das Rotationselement (2) zumindest teilweise übergreifenden Bremstrommel (8) sowie mit wenigstens einem zwischen dem Rotationselement (2) und einer Innenwandung (7) der Bremstrommel (8) im Wesentlichen radial beweglichen Fliehbacken (4), der an dem Rotationselement (2) angeordnet ist, **dadurch gekennzeichnet, dass** eine Zusatzbremseinrichtung für das Rotationselement (2) vorgesehen ist, die bei Überschreiten einer vorgegebenen Drehzahl durch das Rotationselement (2) auslöst.

2. Fliehkraftbremse nach Anspruch 1, **dadurch gekennzeichnet, dass** die Bremstrommel (8) Bestandteil der Zusatzbremseinrichtung ist, wobei die Bremstrommel (8) begrenzt drehbeweglich angeordnet ist und von dem zumindest einen Fliehbacken (4) bei Überschreiten der vorgegebenen Drehzahl um einen vorgegebenen Winkelbereich mitgenommen wird und dabei die Zusatzbremsung auslöst.

3. Fliehkraftbremse nach Anspruch 1 oder 2, **dadurch gekennzeichnet, dass** an der Bremstrommel (8) eine Scheibe (10) drehfest angeordnet ist, die axial beweglich ist.

4. Fliehkraftbremse nach einem der vorhergehenden Ansprüche, **dadurch gekennzeichnet, dass** die Scheibe (10) unterhalb der vorgegebenen Drehzahl in axialer Richtung durch einen Verriegelungsmechanismus (17) verriegelt ist und oberhalb der vorgegebenen Drehzahl axial entriegelt ist und eine insbesondere axial wirkende Bremskraft zum Abbremsen des Rotationselements (2) erzeugt.

5. Fliehkraftbremse nach einem der vorhergehenden Ansprüche, **dadurch gekennzeichnet, dass** die entriegelte Scheibe (10) mit zumindest einer drehfest mit dem Rotationselement (2) verbundenen Bremsscheibe (13), vorzugsweise einer Membranscheibe, und einem drehfesten Widerlager (12) zusammenwirkt.

6. Fliehkraftbremse nach einem der vorhergehenden Ansprüche, **dadurch gekennzeichnet, dass** zwischen der Scheibe (10) und der Bremsscheibe (13) und/oder zwischen der Bremsscheibe (13) und dem Widerlager (12) ein Bremsbelag (14, 15) vorgesehen ist.

7. Fliehkraftbremse nach einem der vorhergehenden Ansprüche, **dadurch gekennzeichnet, dass** mehrere Bremsscheiben (13) vorgesehen sind, zwischen die Lamellen des Widerlagers (12) eingreifen.

8. Fliehkraftbremse nach einem der vorhergehenden Ansprüche, **dadurch gekennzeichnet, dass** die Scheibe (10) durch mindestens eine Axialfeder (11) axial vorgespannt ist.

9. Fliehkraftbremse nach einem der vorhergehenden Ansprüche, **dadurch gekennzeichnet, dass** die Vorspannung der mindestens einen Axialfeder (11) einstellbar ist.

10. Fliehkraftbremse nach einem der vorhergehenden Ansprüche, **dadurch gekennzeichnet, dass** der Verriegelungsmechanismus (17) eine oder mehrere Kugeln (18) umfasst, die unterhalb der vorgegebenen Drehzahl in einer Vertiefung (23) des Widerlagers (12) angeordnet sind.

11. Fliehkraftbremse nach einem der vorhergehenden Ansprüche, **dadurch gekennzeichnet, dass** die Kugeln (18) in einem Kugelkäfig (19) angeordnet sind.

12. Fliehkraftbremse nach einem der vorhergehenden Ansprüche, **dadurch gekennzeichnet, dass** die Zusatzbremseinrichtung manuell zurücksetzbar ist.

13. Fliehkraftbremse nach einem der vorhergehenden Ansprüche, **dadurch gekennzeichnet, dass** die Zusatzbremseinrichtung bei einem vorgebbaren Ereignis manuell oder automatisch auslösbar ist.

14. Fliehkraftbremse nach einem der vorhergehenden Ansprüche, **dadurch gekennzeichnet, dass** ein Sensor vorgesehen ist, der ein Auslösen der Zusatzbremseinrichtung erkennt und mit einer Signalisierungseinrichtung in Verbindung steht, die das Auslösen der Zusatzbremseinrichtung signalisiert.
